# EUROPÄISCHE PATENTSCHRIFT

(11) **EP 0 395 897 B1**
(45) Veröffentlichungstag und Bekanntmachung des Hinweises auf die Patenterteilung: **22.09.1993**
(21) Anmeldenummer: 90106337.0
(22) Anmeldetag: 03.04.1990
(51) Int. Cl.: F26B 3/06, F26B 25/10, F26B 25/12, A23L 3/04, A23L 3/18, A23L 3/36, A23L 3/40, A23G 7/02

(54) **Tunnel zum Kühlen, Wärmen oder Trocknen von Produkten der Nahrungsmittel-, insbesondere der Süsswarenindustrie**
Tunnel for cooling, heating or drying of food products, especially of the confectionary industry
Tunnel de refroidissement, chauffage ou séchage de produits de l'industrie alimentaire, en particulier de la confisserie

(30) Priorität: 28.04.1989 DE 3914098
(43) Veröffentlichungstag der Anmeldung: 07.11.1990
(73) Patentinhaber: Sollich GmbH & Co. KG, D-32102 Bad Salzuflen (DE)
(72) Erfinder: Sollich, Helmut, D-2341 Rabenkirchen (DE)
(74) Vertreter: Rehberg, Elmar, Dipl.-Ing.

(56) Entgegenhaltungen:
- EP-A- 0 144 456
- DE-A- 2 322 918
- DE-A- 2 416 650
- GB-A- 974 824
- GB-A- 1 152 222
- GB-A- 1 283 073
- LU-A- 68 505
- US-A- 3 434 301
- US-A- 4 688 476
- CONFECTIONERY PRODUCTION, Band 55, Nr. 7, Juli 1989, Seiten 466,473, Surbiton,Surrey, GB; "Sollich cooling tunnels"

## Beschreibung

Die Erfindung bezieht sich auf einen Tunnel zum Kühlen, Wärmen oder Trocknen von Produkten der Nahrungsmittel-, insbesondere der Süßwarenindustrie, mit einem insbesondere aus mehreren Abschnitten zusammengesetzten Tunnelboden, mit einer Mehrzahl hintereinander angeordneter, selbsttragend ausgebildeter Hauben mit umgekehrt U-förmigem Querschnitt aus geschäumtem Hartkunststoff, die unabhängig gegenüber dem Tunnelboden hochhebbar sind, wobei auf beiden Seiten des Tunnels zwischen den Rändern des Bodens und den auf den Rändern aufruhenden Schenkeln der Hauben nach oben aushängbare und in Längsrichtung über eine Haube und einen Abschnitt des Tunnelbodens durchgehende und aus einem rippenartigen Vorsprung am einen Teil, beispielsweise am Boden, und einer nutartigen Vertiefung am anderen Teil, z. B. am Schenkel der Haube, bestehende Schiebefalze gebildet sind, und mit einem in Längsrichtung durch den Innenraum des Tunnels hindurchgeführten Förderband zur Aufnahme der Produkte. Der innere Aufbau des Tunnels, also die Anbringung und Abteilung von luft- oder wasserdurchströmten Kanälen, insbesondere zu Kühlzwecken, und deren Aufbau ist für die vorliegende Erfindung an sich von untergeordneter Bedeutung. Es geht vielmehr um die Ausbildung und Anordnung der Wandung des Tunnels, die entweder aus einem durchgehenden Boden oder aus mehreren zusammengesetzten Abschnitten bestehen kann, wobei dieser Tunnelboden durch eine Mehrzahl hintereinander angeordneter Hauben abgedeckt und damit ein sich in Längsrichtung des hindurchgeführten Förderbands erstreckender Tunnelinnenraum umschlossen ist.

Ein Tunnel der eingangs beschriebenen Art ist aus der EP-A-144 456 bekannt. Die Hauben sind dabei bereits als Formteile aus geschäumtem Hartkunststoff, insbesondere Polyurethan, ausgebildet, so daß sie als selbsttragende Einheiten den Tunnelboden überdecken. Zu Abdichtzwecken ist im Bereich beider Schenkel jeder Haube und des Bodens ein Schiebefalz vorgesehen, der aus einer durchgehenden Rippe am Boden und einer korrespondierenden Ausnehmumg am freien Rand des Schenkels der Haube besteht. Dieser Schiebefalz ist über die Längsrichtung der Haube und somit auch über die Längsrichtung des Tunnels durchgehend vorgesehen. Der Schiebefalz dient zu Abdichtzwecken in Längsrichtung. In Querrichtung ist zumindest in je eine Stirnseite jeder Haube eine über den U-förmigen Querschnitt durchgehende Dichtung eingelegt. Über in Längsrichtung wirkende Spanneinrichtungen werden die Hauben aneinandergepreßt, so daß damit über die eingelegten Dichtungen auch in Querrichtung eine Abdichtung des Tunnels erfolgt. Die Hauben weisen im Bereich ihrer Stirnseiten keine Überdeckung auf.

Bei jedem insbesondere in der Süßwarenindustrie eingesetzten Tunnel ist von Zeit zu Zeit eine Reinigung des Innenraums des Tunnels erforderlich, wobei sich diese Reinigung insbesondere auf die Bereiche des Tunnelbodens, aber auch auf die sonstigen Einbauten, z. B. Kühlflächen, Leitbleche u. dgl. beziehen kann. Auch der labyrinthartige Durchgang im Bereich des Schiebefalzes erfordert eine Reinigung. Es kommt nämlich ohne Weiteres vor, daß beispielsweise von durch den Tunnel geführten Produkten Streugut, welches vorher aufgestreut war, wie gehackte Nüsse, Puffreis, Haferflocken o. dgl. von den Produkten während des Durchlaufs auf dem Förderband im Tunnel herabfallen und dann im Innenraum abgelagert werden. Dies geschieht auch mit Fett enthaltenden Partikeln, beispielsweise Schokoladesplittern und anderen Bestandteilen, die von den Produkten während des Durchlaufs durch den Tunnel abfallen oder von dem Förderband, welches auch häufig als Gitterband ausgebildet ist, in den Tunnelinnenraum eingebracht werden. Diese Fetteile werden bei längerem Verbleiben im Tunnel ranzig. Auch durch die Kühlluft eingeschleppte Staubpartikel u. dgl. können eine Reinigung des Tunnelinnenraums von Zeit zu Zeit erfordern. Wenn dies nicht geschieht, ist die erforderliche Hygiene nicht mehr eingehalten. Es kann auch erforderlich werden, beispielsweise zur Produktüberwachung kurzfristig Einsicht in den Tunnelinnenraum nehmen zu müssen, wobei auch die Probeentnahme von Produkten vorkommen kann. In jedem Fall ist es sehr wichtig, daß der Innenraum eines solchen Tunnels zumindest zu Reinigungszwecken leicht zugänglich ist.

Bei dem aus der EP-A- 144 456 bekannten Tunnel sind zwischen jeder Haube und dem zugehörigen Boden Spreizglieder vorgesehen, die aus aneinander angelenkten Hebeln oder Laschen bestehen, so daß jede Haube bis über das Förderband hinaus vom Boden begrenzt abgehoben und hochgestellt werden kann, damit der Innenraum zugänglich wird. Es versteht sich, daß zum Hochheben einer oder mehrerer Hauben die axiale Längsverspannung der Hauben zuvor gelöst werden muß. Infolge der fehlenden Überdeckung der Hauben kann jedoch vorteilhaft jede beliebige Haube unabhängig von den Nachbarhauben hochgehoben und über die Spreizglieder in der hochgehobenen Stellung gesichert werden. Damit ist vorteilhaft der Innenraum des Tunnels von beiden Längsseiten des Tunnels her zugänglich. Diese beidseitige Zugänglichkeit ist sehr wichtig, da die Tunnel eine Breite bis in die Größenordnung von 2 m aufweisen können, so daß eine Reinigung nur von einer Seite her bei solch breiten Tunneln nicht möglich ist. Nachteilig ist, daß zum Hochheben der Hauben zwei Bedienungspersonen erforderlich sind, um die Haube gemeinsam hochzuheben. Auch ist die Anordnung, Ausbildung und Handhabung der Spreizglieder nicht problemlos. Sie bestehen in der Regel aus Metall und müssen zunächst einmal an den aus geschäumten Hartkunststoff hergestellten Hauben montiert werden. Die Verwendung von Metallteilen an einem solchen Tunnel ist aus wärmetechnischen Gründen immer nachteilig. Bereits die ordnungsgemäße Verankerung der Spreizglieder in dem Kunststoffmaterial der Hauben ist nicht einfach. Für Tunnel mit geringer Tunnelbreite würde es durchaus genügen, wenn die Hauben nur einseitig hochklappbar wären, weil dann die Reinigung auch der gegenüberliegenden Seite von einer Seite aus möglich wäre. Dies ist bei den bekannten Hauben nicht möglich, weil die Hauben nur durch eine translatorische Bewegung hochgehoben werden können. Für manche Zwecke wäre es auch sinnvoll, wenn die Hauben gänzlich von dem Boden abnehmbar wären. Auch dies ist hier ohne Demontage der Spreizglieder nicht möglich.

Es ist weiterhin ein Tunnel bekannt, bei dem sowohl die Abschnitte des Tunnelbodens wie auch die Hauben aus geschäumtem Hartkunststoff bestehen und keinerlei Metallteile aufweisen. Auch hier ist zu Abdichtzwecken ein Schiebefalz zwischen den Abschnitten des Bodens und den Hauben gebildet. Dieser Schiebefalz erfüllt infolge seiner geringen Ausdehnung quer zur Horizontalebene keinerlei Scharnierwirkung. Er bildet lediglich eine Labyrinthdichtung für den Innenraum des Tunnels. Die Hauben sind von dem Tunnelboden damit zwar abnehmbar, aber nicht kippbar. Die Abnehmbarkeit ergibt eine gute Zugänglichkeit von beiden Seiten des Tunnels, wie es zu Reinigungszwecken erwünscht ist. Während einer solchen Reinigung müssen jedoch die Hauben an anderer Stelle abgestellt werden, beispielsweise auf einer Nachbarhaube, die noch nicht entfernt ist oder auf dem Hallenboden. Da hier auf Metallteile völlig verzichtet ist, ergibt sich vorteilhaft ein geringes Gewicht der Haube mit einer einwandfreien Oberfläche, die leicht sauberzuhalten ist und keine Winkel und Ecken aufweist, in denen sich Bakterien ansiedeln könnten. Außerdem ist auf diese Weise dis Tunnelwandung wärmetechnisch optimal gestaltet, weil durch Metallteile gebildete Wärmebrücken vermieden werden. Die Abschnitte des Tunnelboden und auch die Hauben sind leicht herstellbar. Sie erfordern nach dem Aufschäumen in der Form keinerlei Nacharbeit und es entfällt auch die Montage irgendwelcher Metallteile. Nachteilig an den Hauben dieses bekannten Tunnels ist es, daß die Hauben nicht einseitig hochgeklappt werden können, sondern immer abgenommen werden müssen. In der abgenommenen Stellung besteht eine gewisse Beschädigungsgefahr für die Hauben.

Es ist weiterhin ein Tunnel bekannt, dessen Hauben zumindest teilweise aus Metall bestehen. Die Metallteile können in Form eines Haubengerüsts vorliegen, welches mit Kunststoff ausgeschäumt ist, um den wärmetechnischen Bedingungen zu genügen. Es ist auch bekannt, lackierte Stahlbleche in der inneren und äußeren Oberfläche der Haube anzuordnen und den Zwischenraum auszuschäumen. Diese bekannten Hauben besitzen im Bereich der Stirnseite eine Überdeckung, die zu Abdichtzwecken sinnvoll ist, jedoch den Nachteil hat, daß nur jede zweite Haube unabhängig von den Nachbarhauben allein hochgeklappt werden kann. Die Hauben sind zusätzlich mit Scharnieren ausgerüstet, die auf einer Seite des Tunnels, also im Bereich eines der beiden Schenkel des U-förmigen Querschnitts der Haube angeordnet sind. Infolgedessen lassen sich diese Hauben auch nur von einer Seite her aufschwenken, so daß insbesondere bei breiten Tunneln eine Reinigungsmöglichkeit der anderen Seite, insbesondere im Bereich des Scharniers, nicht mehr gegeben ist. Die Hauben lassen sich auch nicht abnehmen, was einen weiteren Nachteil darstellt. Infolge des durch die Metallteile wesentlich höheren Gewichts ist auch die Handhabung beim Hochschwenken erschwert. Die Hauben sind jedoch in der hochgeschwenkten Stellung vor einer Beschädigung geschützt. Die Herstellung der Hauben und insbesondere die Anbringung der Scharniere ist aufwendig.

Aus der US-A-4 688 476 ist eine Maschine zur industriellen Behandlung von Nahrungsmitteln, insbesondere zu Blanchierzwecken, bekannt, die einen von einer Haube abgedeckten Behälter besitzt, in welchem eine die Nahrungsmittel aufnehmende Trommel angeordnet ist. Die einander zugekehrten, auch über die Stirnseiten umlaufenden Ränder des Behälters und der Haube sind derart aufeinander abgestimmt, daß die Trommel bei geschlossener Haube weitgehend umschlossen ist. Die Nahrungsmittel werden einer Behandlung mit Wasser bei gesteuerten Temperaturen unterzogen und wandern während der Behandlung durch die Vorrichtung hindurch. Für Reinigungs- und Wartungszwecke wird das Innere des Behälters von beiden Seiten der Maschine dadurch zugänglich gemacht, daß auf beiden Längsseiten der Maschine örtlich ausgebildete, nach oben aushängbare Scharniere vorgesehen sind, die zusätzlich zu der Ausbildung der Ränder und örtlich davon getrennt angeordnet sind. Jedes Scharnier weist einen am Unterteil des Behälters vorgesehenen und seitlich nach außen über die Randausbildung vorspringenden Arm auf, der eine nach oben offene U-förmige Ausnehmung trägt. An der Haube ist in Zuordnung zu jeder örtlichen Ausnehmung ein weiterer Arm befestigt, der über die Randausbildung der Haube nach außen vorspringt und der seitlich vorstehend Lagerzapfen besitzt, die in die U-förmige Ausnehmung eingreifen. Zum wahlweisen Verschwenken bzw. Öffnen der Haube von der einen oder anderen Seite greifen Pneumatikzylinder an der Haube an, die über eine Steuervorrichtung mit Steuerventilen und Mikroschaltern so betätigbar sind, daß die der hochzuschwenkenden Seite der Haube zugeordneten Pneumatikzylinder belüftet werden, während gleichzeitig die der anderen Seite der Haube zugeordneten Pneumatikzylinder entlüftet sind. Durch das erhebliche Gewicht der Haube wird so immer eine eindeutig definierte Schwenkachse gebildet. Die Haube läßt sich ohne größere Demontagearbeiten der Maschine nicht gänzlich von dem Behälterunterteil abnehmen.

Der Erfindung liegt die Aufgabe zugrunde, einen Tunnel der eingangs beschriebenen Art so auszubilden, daß als Hauben Formkörper aus geschäumten Hartkunststoff Verwendung finden können, die ohne Metallteile auskommen und bei denen trotzdem eine gute Zugänglichkeit, insbesondere zu Reinigungszwecken, von beiden Seiten her möglich ist. Darüberhinaus sollen die Hauben auch leicht abnehmbar sein.

Erfindungsgemäß wird dies dadurch erreicht, daß die Schiebefalze als Scharniere ausgebildet ist, wobei der Dichtspalt in jedem Scharnier gleichzeitig die Abdichtung des Innenraumes des Tunnels nach außen darstellt. Damit wird vorteilhaft nicht nur das wahlweise Hochschwenken einer Haube von der einen oder von der anderen Tunnelseite her möglich, so daß nacheinander der Tunnelinnenraum auf der einen Seite und der anderen Seite leicht gereinigt oder inspiziert werden kann, sondern die Scharniere werden zugleich in die Ausbildung der Schiebefalze integriert, so daß sie nicht als gesonderte Bauteile über die Randausbildung an Haube und Tunnelboden überstehen. Beim Hochschwenken einer Seite der Haube wird das auf dieser Seite vorgesehene Scharnier ausgehängt, während das auf der anderen Seite vorgesehene Scharnier seine Scharnierfunktion erfüllt und die Schwenkbewegung zuläßt. Gleiches gilt für den umgekehrten Fall. Darüberhinaus aber ist es auch möglich, die Haube auf beiden Seiten gleichzeitig anzuheben, um sie bei einer translatorischen Bewegung vom Tunnelboden abzunehmen. Dann wird der gesamte Innenraum zugleich zugänglich. Die Hauben weisen vorteilhaft ein geringes Gewicht auf, da sie im wesentlichen nur aus aufgeschäumtem Hartkunststoff bestehen. Vorteilhaft ist es natürlich, wenn auch die Scharniere aus Kunststoff bestehen. In diesem Fall werden Wärmebrücken vermieden.

Die neue, besonders einfache Scharnierausbildung erbringt zudem noch den Vorteil, daß durch die nutartige Vertiefung an der Haube das Gewicht der Haube nicht vergrößert wird. Wichtig ist es, daß die als aushängbare Scharniere ausgebildeten Schiebefalze auch verläßlich ihre Dichtfunktion erfüllen können, daß also das Scharnier in dieser Gebrauchslage die Haube mit dem Boden verbindet und nur die Schwenkbewegung um die Scharnierachse zuläßt, so daß die Haube beim Hochschwenken von diesem eingehängten Scharnier verläßlich am Boden gehalten ist und nicht herabfallen kann. Andererseits muß aber das Scharnier auch leicht nach oben aushebbar sein, damit die Haube wahlweise auf der einen oder anderen Seite hochgeschwenkt werden kann.

Die aushängbaren Scharniere sind zugleich auch zu Abdichtzwecken als Schiebefalze ausgebildet bzw. erbringen zugleich die Scharnierwirkung wie auch die Abdichtwirkung. Damit wird auf die gesonderte Anordnung von Schiebefalzen verzichtet. Da die aushängbaren Scharniere ohnehin größer als die bekannten Schiebefalze ausgebildet sein müssen, ist auch der Labyrinthspalt zu Abdichtzwecken ohne Weiteres vergrößert und damit die Abdichtwirkung verbessert.

Besonders vorteilhaft ist es, wenn die Schiebefalze integrale Bestandteile der Abschnitte des Tunnelbodens und der Hauben sind, die bei der Formgebung mit eingeformt sind. Dies vereinfacht und verbilligt die Herstellung erheblich und es ist vorteilhaft möglich, Bestandteile des Scharniers bzw. der Scharniere vergleichsweise großflächig auszubilden. Jegliche Nacharbeit, insbesondere Montage, von Metallteilen entfällt.

Die nur an den Längsseiten angeordneten Scharniere sind so mit Spiel in Längsrichtung ausgestattet, um einerseits die erforderlichen Wärmebewegungen beim Ausdehnen bzw. Kontrahieren der Bestandteile des Tunnels zuzulassen und andererseits das Verspannen der Hauben in Längsrichtung zu ermöglichen.

Zwischen jedem Schenkel der Haube und dem Abschnitt des Tunnelbodens können den Aufschwenkwinkel der Haube begrenzende Anschläge vorgesehen sein, die dem Benutzer anzeigen, daß nach dem Hochschwenken einer Seite der Haube der ordnungsgemäße vorgesehene Aufschwenkwinkel erreicht ist und die Aufschwenkbewegung damit beendet ist. Damit wird der Gefahr entgegengewirkt, daß durch allzu weites Aufschwenken der Hauben auch das auf der gegenüberliegenden Seite des Tunnels vorgesehene Scharnier versehentlich ausgehängt werden könnte.

Jeder Rand des Abschnitts des Tunnelbodens kann von einem als durchgehende Griffleiste ausgebildeten Fortsatz an jedem Schenkel der Haube abgedeckt sein. Es entfällt damit die gesonderte Anordnung bzw. Einformung von Griffmulden oder Griffleisten an der Haube. Der aus wärmetechnischen Gründen sinnvolle Fortsatz, der den Tunnelboden seitlich zumindest teilweise überdeckt, kann gleichzeitig die Funktion einer Griffleiste erhalten, was nicht nur in der Handhabung Vorteile bringt, sondern auch ästhetisch befriedigend ist.

Jede Haube kann beidseitig mit den Aufschwenkwinkel sichernden ausklappbaren Stützstäben versehen sein. Diese Stützstäbe können an der Haube angeordnet sein oder auch am Tunnelboden. Es ist möglich, die Stützstäbe auch lose zu handhaben und nur in der hochgeschwenkten Stellung zwischen Tunnelboden und Haube einzubringen.

Die Erfindung wird anhand bevorzugter Ausführungsbeispiele weiter erläutert und beschrieben. Es zeigen:
- Figur 1: eine perspektivische Ansicht eines Tunnels,
- Figur 2: eine Stirnansicht in einen Tunnel, teilweise geschnitten, in zwei Stellungen anhand von Halbschnitten,
- Figur 3: eine Stirnansicht einer Ausführungsform des aushängbaren Scharniers, etwa in natürlicher Größe,
- Figur 4: eine ähnliche Darstellung wie Figur 3 bei einer weiteren Ausführungsform und
- Figur 5: schließlich eine letzte Ausführungsform des aushängbaren Scharniers.

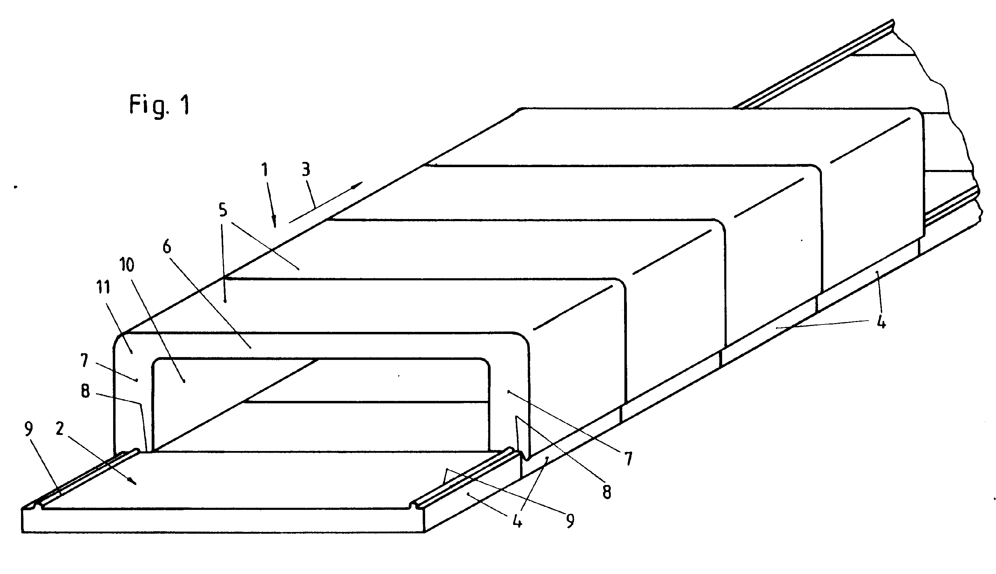

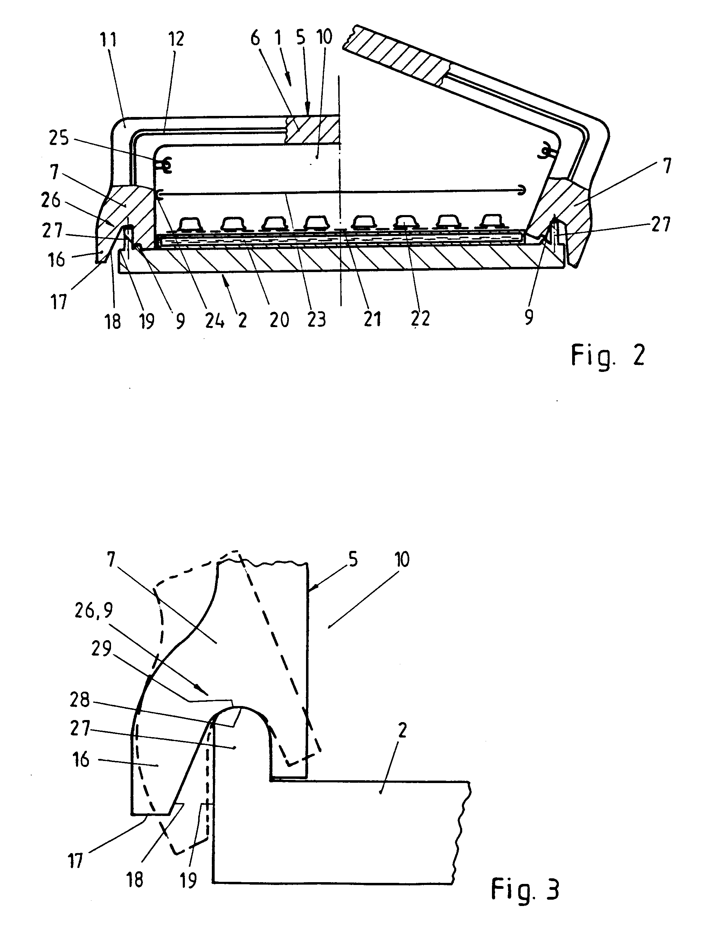

Figur 1 zeigt übersichtsmäßig die wesentlichen Teile eines Tunnels 1. Der Tunnel 1 besitzt einen Tunnelboden 2, der entweder in Längsrichtung 3 durchgehend ausgebildet sein kann oder aus mehreren Abschnitten 4 zusammengesetzt ist. Dem Tunnelboden 2 sind Hauben 5 zugeordnet, die hintereinander in Längsrichtung 3 vorgesehen sind. Jede Haube 5 weist im wesentlichen einen umgekehrt U-förmigen Querschnitt auf, ist als geschäumter Formkörper aus Hartkunststoff, insbesondere aus Polyurethan, ausgebildet und ist symmetrisch zu einer vertikalen Längsmittelebene ausgebildet. Jede Haube 5 weist eine im wesentlichen horizontal verlaufende Haubendecke 6 auf, von der nach unten zwei Schenkel 7 abstehen, deren freier Rand 8 auf dem Tunnelboden 2 im Randbereich aufruht. In diesem Bereich ist zwischen den Schenkeln 7 und dem Tunnelboden 2 ein Schiebefalz 9 gebildet, der hier, wie ersichtlich, aus einer Rundrippe am Tunnelboden 2 und einer korrespondierenden Vertiefung im Rand 8 der Schenkel 7 besteht. Damit wird ein labyrinthartiger Spalt gebildet, der zu Abdichtzwecken eines von der Haube 5 überspannten und von dem Tunnelboden 2 abgeschlossenen Innenraums 10 dient. Die Hauben 5 weisen senkrecht zu der Längsrichtung 3 glatte Stirnflächen 11 auf, sind also ohne Überdeckung direkt nebeneinander bzw. hintereinander angeordnet. Im Bereich mindestens einer der beiden Stirnflächen 11 ist jede Haube 5 mit einer U-förmig umlaufenden, in eine Nut eingelegten Dichtung 12 (Figur 2) versehen. Über nicht dargestellte Anpreßeinrichtungen werden die Hauben 5 in Längsrichtung 3 zusammengespannt bzw. zusammengedrückt, so daß zwischen den Hauben 5 die erforderliche Dichtung gewährleistet ist.

Im Bereich jedes Schenkels 7 ist nach außen ein den Tunnelboden 2 seitlich überdeckender Fortsatz 16 gebildet (Fig. 2), der in einer Griffleiste 17 endet, mit deren Hilfe jede Haube 5 nach dem Lösen der in Längsrichtung 3 wirkenden Spanneinrichtung auf jeder Seite des Tunnels wahlweise hochgeschwenkt werden kann, wie dies anhand der Figur 2 im rechten Halbschnitt verwirklicht ist. Beim Hochschwenken werden die beiden auf der linken Seite angeordneten Scharniere 26 ausgehoben, während die beiden auf der rechten Seite liegenden Scharniere die Haube 5 an dem Tunnelboden 2 sichern und nur die Schwenkbewegung zulassen. Zur Begrenzung der Schwenkbewegung ist innen an dem Fortsatz 16 ein Anschlag 18 gebildet, der mit einer Kante 19 an dem Tunnelboden 2 zusammenarbeitet, so daß auf diese Art und Weise der Verschwenkwinkel zugelassen und andererseits ein Überschreiten des Schwenkwinkels verhindert wird.

Wie Figur 2 zu erkennen gibt, kann der Innenraum 10 des Tunnels 1 in ganz verschiedener Weise aufgebaut und unterteilt sein. Es ist hier ein Beispiel dargestellt. Auf dem Tunnelboden 2 ist ein Kühlwasserkanal 20 montiert, der von Kühlwasser durchströmt wird. Auf diesem Kühlwasserkanal 20 ist ein Förderband 21 gelagert, welches in Längsrichtung 3 angetrieben und durch den Innenraum 10 bewegt wird. Auf dem Förderband 21 liegen die Produkte 22, beispielsweise Schokoladeriegel. Es kann ein Blech 23 mit randseitiger Dichtung 24 vorgesehen sein, um den Inneraum 10 oberhalb der Produkte 22 in zwei voneinander abgetrennte Räume zu unterteilen, durch die je nach der Ausbildung und Anwendung des Tunnels 1 Luft hindurchgeführt werden kann. Das Blech 23 kann entweder auf dem Tunnelboden 2 montiert und aufgelagert sein, oder aber auch in der Haube 5 verankert sein. In ersterem Fall ist es möglich, im Innenraum 10 seitlich an den Schenkeln 7 Stützstäbe 25 anzuordnen, die in hochgeschwenktem Zustand der Haube 5 herausgeklappt werden können und die abgeschwenkte Stellung sichern, so daß der Innenraum 10 für Reinigungs- und Inspektionszwecke zugänglich ist. Gleiches gilt umgekehrt für die andere Seite des Tunnels 1. Die aushängbaren Scharniere 26 ermöglichen es andererseits, jede Haube 5 auf beiden Seiten an den Griffleisten 17 zu ergreifen und gleichzeitig auszuheben. Auf diese Art und Weise kann die Haube 5 gänzlich abgenommen werden, so daß der Innenraum 10 damit noch vollständiger zugänglich wird, auch beispielsweise oberhalb des Blechs 23.

Anhand der Figuren 3 bis 5 sind verschiedene Ausführungsformen verdeutlicht Die über die Länge der Haube 5 in Längsrichtung 3 durchgehend ausgebildeten aushängbaren Scharniere 26 weisen einen durchgehenden rippenartigen Vorsprung 27 an dem Tunnelboden 2 auf, der nach oben abstehend vorgesehen ist. Der Vorsprung 27 kann auf seiner dem Schenkel 7 zugekehrten Seite abgerundet sein, wie dies durch eine gewölbte Fläche 28 verdeutlicht ist. Im Rand 8 des Schenkels 7 ist jeweils eine nutartige Vertiefung 29 ausgebildet, die korrespondierend zu dem Vorsprung 27 bzw. der Fläche 29 ausgebildet ist. Zwischen dem Vorsprung 27 und der Vertiefung 29, die grundsätzlich auch in umgekehrter Anordnung bzw. Verteilung zwischen Tunnelboden 2 und Haube 5 angeordnet sein könnten, wird hier nicht nur das aushängbare Scharnier 26, sondern zugleich auch der Schiebefalz 9 gebildet, d.h. der Dichtspalt im Scharnier 26 stellt gleichzeitig die Abdichtung des Innenraums 10 des Tunnels 1 nach außen dar. In gestrichelter Linienführung ist die Stellung des Scharniers 26 dargestellt, welches nicht ausgehoben ist und seine Scharnierfunktion erfüllt, wenn das an der gegenüberliegenden Seite der Haube 5 vorgesehene Scharnier 26 ausgehoben und die Haube 5 damit auf der anderen Seite hochgeklappt ist.

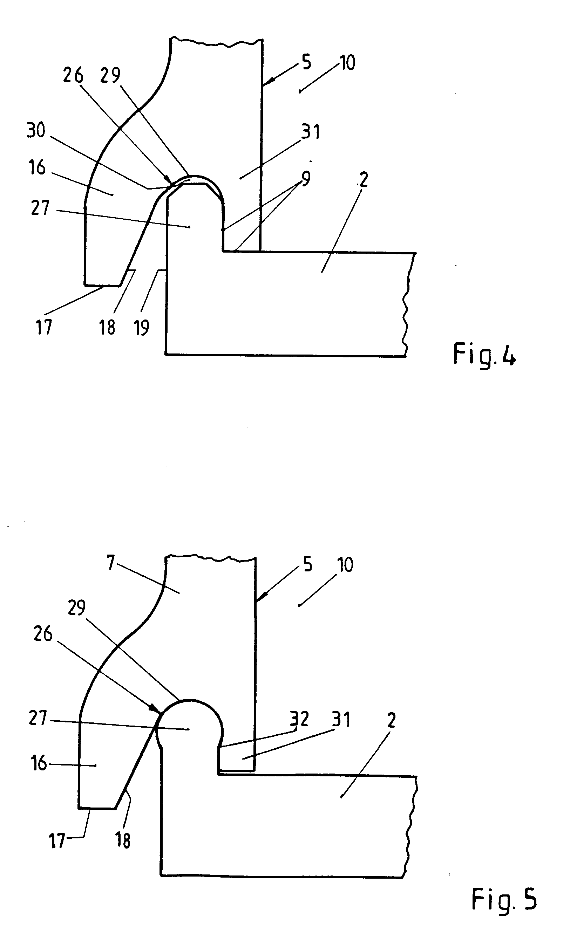

Figur 4 zeigt eine Ausführungsform, bei welcher das aushängbare Scharnier 26 einen Vorsprung 27 aufweist, der der Vertiefung 29 zugekehrt kantig ausgebildet ist. Die Vertiefung 29 kann wiederum abgerundet ausgebildet sein. In diesem Bereich ist hier jedoch Luft bzw. Spiel 30 vorgesehen, so daß der Schiebefalz 9 im Bereich eines inneren Fortsatzes 31 vorgesehen ist. Erst beim Hochschwenken wird das Spiel 30 in dem gegenüberliegenden Scharnier 26 beseitigt und das Scharnier kann seine Scharnierfunktion erfüllen.

Bei der Ausführungsform gemäß Figur 5 weist der Vorsprung 27 des aushängbaren Scharniers 26 eine kreisbogenförmig gewölbte Oberfläche auf, die sich zumindest an der dem Innenraum 10 zugekehrten Seite um etwas mehr als 180° erstreckt, so daß hier eine geringfügige Hinterschneidung 32 gebildet ist, mit welcher der Schenkel 7 der Haube 5 nach dem Herabschwenken der Haube 5 in Richtung auf den Tunnelboden 2 gleichsam einrastet. Es versteht sich, daß die Hinterschneidung 32 nur geringfügig und nur innerhalb der von der Elastizität des Materials der Haube 5 und des Tunnelbodens 2 bereitgestellten Grenzen vorgesehen ist. Das Ausheben des Scharniers 26 geschieht dann auch unter Überwindung einer kleinen Kraftschwelle. Andererseits wird durch diese Ausbildung die normale Scharnierfunktion begünstigt. Auch hier ist die Scharnierfunktion und die Funktion des Schiebefalzes in einem Bauelement verwirklicht.

### Bezugszeichenliste:

- 1 =: Tunnel
- 2 =: Tunnelboden
- 3 =: Längsrichtung
- 4 =: Abschnitt
- 5 =: Haube
- 6 =: Haubendeckel
- 7 =: Schenkel
- 8 =: Rand
- 9 =: Schiebefalz
- 10 =: Innenraum
- 11 =: Stirnfläche
- 12 =: Dichtung
- 13 =: örtliches Scharnier
- 14 =: Vorsprung
- 15 =: Vertiefung
- 16 =: Fortsatz
- 17 =: Griffleiste
- 18 =: Anschlag
- 19 =: Kante
- 20 =: Kühlwasserkanal
- 21 =: Förderband
- 22 =: Produkt
- 23 =: Blech
- 24 =: Dichtung
- 25 =: Stützstab
- 26 =: durchgehendes Scharnier
- 27 =: Vorsprung
- 28 =: Fläche
- 29 =: Vertiefung
- 30 =: Spiel
- 31 =: Fortsatz
- 32 =: Hinterschneidung

## Patentansprüche

1. Tunnel zum Kühlen, Wärmen oder Trocknen von Produkten der Nahrungsmittel-, insbesondere der Süßwarenindustrie, mit einem insbesondere aus mehreren Abschnitten (4) zusammengesetzten Tunnelboden (2), mit einer Mehrzahl hintereinander angeordneter, selbsttragend ausgebildeter Hauben (5) mit umgekehrt U-förmigem Querschnitt aus geschäumtem Hartkunststoff, die unabhängig gegenüber dem Tunnelboden hochhebbar sind, wobei auf beiden Seiten des Tunnels zwischen den Rändern des Bodens (2) und den auf den Rändern aufruhenden Schenkeln (7) der Hauben (5) nach oben aushängbare und in Längsrichtung (3) über eine Haube (5) und einen Abschnitt (4) des Tunnelbodens (2) durchgehende und aus einem rippenartigen Vorsprung (27) am einen Teil, beispielsweise am Boden (2), und einer nutartigen Vertiefung (29) am anderen Teil, z. B. am Schenkel (7) der Haube (5), bestehende Schiebefalze (9) gebildet sind, und mit einem in Längsrichtung (3) durch den Innenraum (10) des Tunnels (1) hindurchgeführten Förderband (21) zur Aufnahme der Produkte, dadurch gekennzeichnet, daß die Schiebefalze (9) als Scharniere (26) ausgebildet sind, wobei der Dichtspalt in jedem Scharnier (26) gleichzeitig die Abdichtung des Innenraumes (10) des Tunnels (1) nach außen darstellt.

2. Tunnel nach Anspruch 1, dadurch gekennzeichnet, daß die Schiebefalze (9) integrale Bestandteile der Abschnitte (4) des Tunnelbodens (2) und der Hauben (5) sind, die bei deren Formgebung mit eingeformt sind.

3. Tunnel nach Anspruch 1 oder 2, dadurch gekennzeichnet, daß zwischen jedem Schenkel (7) der Haube (5) und dem Abschnitt (4) des Tunnelbodens (2) den Aufschwenkwinkel der Haube (5) begrenzende Anschläge (18, 19) vorgesehen sind.

4. Tunnel nach einem oder mehreren der Ansprüche 1 bis 3, dadurch gekennzeichnet, daß jeder Rand des Abschnitts (4) des Tunnelbodens (2) von einem als durchgehende Griffleiste (17) ausgebildeten Fortsatz (16) an jedem Schenkel (7) der Haube (5) abgedeckt ist.

5. Tunnel nach einem oder mehreren der Ansprüche 1 bis 4, dadurch gekennzeichnet, daß jede Haube (5) beidseitig mit den Aufschwenkwinkel sichernden ausklappbaren Stützstäben (25) versehen ist.

## Claims

1. Tunnel for the cooling, heating or drying of products of the foodstuffs industry, in particular of the confectionery industry, with a tunnel base (2), which is in particular assembled of several portions (4), with a plurality of hoods (5), which are arranged one behind the other, constructed to be self-supporting and of inverted U-shaped cross-section of foamed synthetic resin material and which are raisable one independently of the other relative to the tunnel base, wherein upwardly releasable slide rabbets (9), which consist of a rib-like projection (27) at one part, for example at the base (2), and a groove-like depression (29) at the other parts,for example at the limb (7) of the hood (5), and are continuous in longitudinal direction over a hood (5) and a portion (4) of the tunnel base (2), are formed on both sides of the tunnel between the rims of the base (2) and the limbs of the hoods (5) resting on the rims; and with a conveyor belt (21), which is led in longitudinal direction (3) through the interior space (10) of the tunnel (1), for the reception of the products, characterised thereby, that the slide rabbets (9) are constructed as hinges (26), wherein the sealing gap in each hinge (26) at the same time represents the outward seal of the interior space (10) of the tunnel (1).

2. Tunnel according to claim 1, characterised thereby, that the slide rabbets (9) are integral components of the portions (4) of the tunnel base (2) and of the hoods (5) and shaped in during their shaping.

3. Tunnel according to claim 1 or 2, characterised thereby, that abutments (18, 19) limiting the angle of upward pivotation of the hood (5) are provided between each limb (7) of the hood (5) and the portion (4) of the tunnel base (2).

4. Tunnel according to one or more of the claims 1 to 3, characterised thereby, that each rim of the portion (4) of the tunnel base (2) is covered by a prolongation (16), which is constructed as continuous handle strip (17), at each limb (7) of the hood (5).

5. Tunnel according to one or more of the claims 1 to 4, characterised thereby, that each hood (5) is provided at both sides with support bars (25), which are tiltable outwards and secure the angle of upward pivotation.

## Revendications

1. Tunnel de refroidissement, chauffage ou séchage de produits de l'industrie alimentaire, en particulier de la confiserie, avec un plancher (2) du tunnel, en particulier composé de plusieurs sections (4), avec une pluralité de capots (5) autoporteurs, disposés à la suite les uns des autres, ayant une section en forme de U renversé, en mousse de matière plastique dure, pouvant être soulevés indépendemment par rapport au plancher (2) du tunnel, tandis que sur les deux côtés du tunnel sont formés, entre les bords du plancher (2) et les ailes (7) des capots (5) reposant sur ces bords, des plis coulissants (9) pouvant être dégagés vers le haut et s'étendant de manière continue dans le sens longitudinal (3) sur un capot (5) et sur une section (4) du plancher (2) du tunnel, et se composant d'un saillant (27) en forme de nervure sur une partie, par exemple sur le plancher (2), et d'un creux (29) en forme de rainure sur l'autre partie, par exemple sur l'aile (7) du capot (5), et avec une courroie transporteuse (21) circulant dans l'espace intérieur (10) du tunnel (1) pour recevoir les produits,
**caractérisé** en ce que les plis coulissants(9) sont conformés comme des charnières (26), la fente d'étanchéité dans chaque charnière (26) représentant en même temps le joint étanche de l'espace intérieur (10) du tunnel (1) vers l'extérieur.

2. Tunnel selon la revendication 1, caractérisé en ce que les plis coulissants (9) sont des parties intégrales des sections (4) du plancher (2) du tunnel et des capots (5), qui sont moulées en même temps que ces éléments lors de leur moulage.

3. Tunnel selon la revendication 1 ou 2, caractérisé en ce que des butées (18, 19) limitant l'angle de basculement des capots (5) sont prévues entre chaque aile (7) du capot (5) et la section (4) du plancher (2) du tunnel.

4. Tunnel selon une ou plusieurs des revendications 1 à 3, caractérisé en ce que chaque bord de la section (4) du plancher (2) du tunnel est recouvert par un appendice (16) sur chaque aile (7) du capot (5) sous la forme d'une moulure de préhension (17) continue.

5. Tunnel selon une ou plusieurs des revendication 1 à 4, caractérisé en ce que chaque capot (5) est muni sur ses deux côtés de barrettes d'appui (25) rabattables assurant l'angle de basculement.
